# EUROPÄISCHE PATENTSCHRIFT

(11) **EP 1 887 183 B1**
(45) Veröffentlichungstag und Bekanntmachung des Hinweises auf die Patenterteilung: **25.06.2008**
(21) Anmeldenummer: 06015942.3
(22) Anmeldetag: 01.08.2006
(51) Int. Cl.: E21D 11/38

(54) **Eckstück eines Dichtungsrahmens für einen Tunneltübbing**
Corner area of a sealing frame for a tunnel tubbing
Coin de cadre d'étanchéité pour panneaux de cuvelage de tunnels

(43) Veröffentlichungstag der Anmeldung: 13.02.2008
(73) Patentinhaber: Ein Shemer Rubber Industries, 37845 D.N. Hefer (IL)
(72) Erfinder: Grabe, Werner, 48249 Dülmen (DE)
(74) Vertreter: Habbel, Hans-Georg

(56) Entgegenhaltungen:
- EP-A- 0 270 287
- EP-B1- 0 644 980
- WO-A-93/14917
- DE-A1- 19 817 429

## Beschreibung

Die Erfindung bezieht sich auf ein Eckstück eines Dichtungsrahmens für einen Tunneltübbing zur Herstellung eines Tunnelausbaus od. dgl. gemäß dem Oberbegriff des Hauptanspruches.

Tunneltübbinge sind rechteckige und gebogene Platten aus Beton, mit denen eine aufgefahrene Strecke, Siele oder ein Tunnel bzw. tunnelähnliches Bauwerk ausgekleidet wird. Um zu verhindern, daß Wasser in den Tunnel einfließen kann, weist jeder Tübbing an seinen vier Schmalseiten eine umlaufende Nut auf, in die ein Dichtungsrahmen aus Dichtungsprofilleisten aus Gummi oder gummiähnlichem Werkstoff eingelegt werden kann, wobei die Dichtungsprofilleisten aus der Nut herausragen müssen. Unter der Einwirkung einer Kraft verringert sich der Spaltabstand zwischen den Tübbingsegmenten, wodurch die beiden einander gegenüberliegenden Dichtungsprofilleisten zusammengepreßt werden, was die Abdichtung des Spaltes zur Folge hat.

Ein gattungsbildendes Eckstück ist aus der EP 0 644 980 B1 bekannt. Hierbei wird vorgeschlagen, daß die Ausnehmungen im Eckstück unter jeweils 45° zu den Hohlkanälen in den Profilleisten verlaufen und das beidseits einer von der äußeren Ecke zur inneren Ecke des Eckstückes führenden Diagonale jeweils so viel Ausnehmungen übereinander liegen, wie jede Seite Nuten aufweist.

Die Herstellung des Eckstückes erfolgt im Spritzgießverfahren, wobei der Einspritzvorgang unter einem gewissen Druck erfolgen muß, um eine gute Verbindung des eigentlichen Eckstückes zu den Enden der angrenzenden Dichtungsprofilleisten zu erreichen. Hierbei besteht die Gefahr, daß ein Teil des eingespritzten Werkstoffes in die Hohlräume der Dichtungsprofilleisten einströmen und sie über eine längere Strecke ausfüllen kann, was zu einem erheblichen Volumenanstieg der Enden der Dichtungsprofilleisten und damit zu einer starken Verringerung der Deformationsfähigkeit führt. Um dies zu vermeiden, sind bisher Stopfen in die Hohlkanäle der Dichtungsprofilleisten endseitig eingesetzt. Abgesehen davon, daß dieses Verfahren aufwendig ist, besteht auch die Gefahr, daß der Stopfen sich in den Kanal der Dichtungsprofilleiste einschiebt und dadurch ein großer Teil der Dichtungsprofilleiste verstarrt.

Der Erfindung liegt die Aufgabe zugrunde, die Seite des Eckstückes, die zum Ende der Dichtungsprofilleiste hin gerichtet ist, so auszubilden, daß während des Spritzvorganges des Eckstückes in einfachster Weise die Kanäle der Dichtungsprofilleiste verschlossen werden, wobei im Eckstück ein Hohlraum geschaffen wird, der zu den Mündungen der Kanäle der Dichtungsprofilleisten hin offen ist, so daß gleichzeitig der Vorteil erreicht wird, daß eine nachträgliche Aktivierung der Dichtungsprofilleiste einschließlich des Eckstückes möglich ist.

Diese der Erfindung zugrundeliegende Aufgabe wird durch die Lehre des Hauptanspruches gelöst, d. h. dadurch, daß ein quer zur Längsachse der Kanäle der Dichtungsprofilleisten verlaufender Hohlraum des Eckstückes durch den Kern während des Spritzgießvorganges gefüllt ist. Wird nach Aushärten die Rahmenecke vom Kern abgezogen, verbindet nun der so erzeugte Hohlraum, der quer zur Längsachse der Kanäle in den Dichtungsprofilleisten verläuft, die Mündungen der Kanäle.

Wird gemäß einem weiteren Merkmal der Erfindung dieser so erzeugte Hohlraum mit seiner offenen Mündung zur Außenseite der Dichtungsprofilleiste und damit zur Außenseite des Tübbings gerichtet, kann Wasser und damit der Wasserdruck in die Dichtung einfließen und diese hinsichtlich ihrer Abdichtwirkung verbessern.

In gleicher Weise ist es möglich, daß der Hohlraum zur Außenseite der Profilleiste geschlossen und mit einem Schlauch verbindbar ist, der eine Druckinjizierung durch den Hohlraum in die Profilkanäle von der Tunnelinnenseite her ermöglicht.

Der Hohlraum kann rechteckigen, parallelogrammförmigen oder einen sonstigen Erfordernissen angepaßten Querschnitt aufweisen.

Zusätzlich zu dem vorstehend erläuterten Hohlraum, der also quer zu der Mündung der Kanäle der Dichtungsprofilleisten verläuft und damit mit dem Raum dieser Kanäle in den Dichtungsprofilleisten in Verbindung steht, können weitere Hohlräume in dem Eckstück vorgesehen sein, die ebenfalls durch entsprechend eingebrachte Kerne erzeugt werden.

Ein Ausführungsbeispiel der Erfindung wird nachfolgend anhand der Zeichnung erläutert. Die Zeichnung zeigt dabei in
- Fig. 1: schaubildlich teilweise geschnitten und teilweise abgebrochen ein Profilleistenstück, in
- Fig. 2: in einer anderen schaubildlichen Darstellungsweise ein Eckstück gemäß der Erfindung, in
- Fig. 3: einen Schnitt gemäß der Linie 3 - 3 in Fig. 1, in
- Fig. 4: einen Schnitt gemäß der Linie 4 - 4 durch das gestrichelt dargestellte Eckstück in Fig. 1 und in
- Fig. 5: eine Schnittdarstellung durch das Eckstück und in

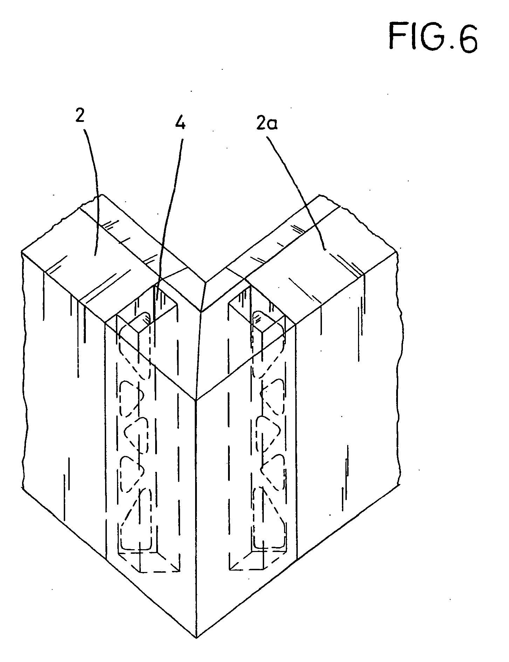

- Fig. 6: eine Draufsicht auf einen Eckbereich.

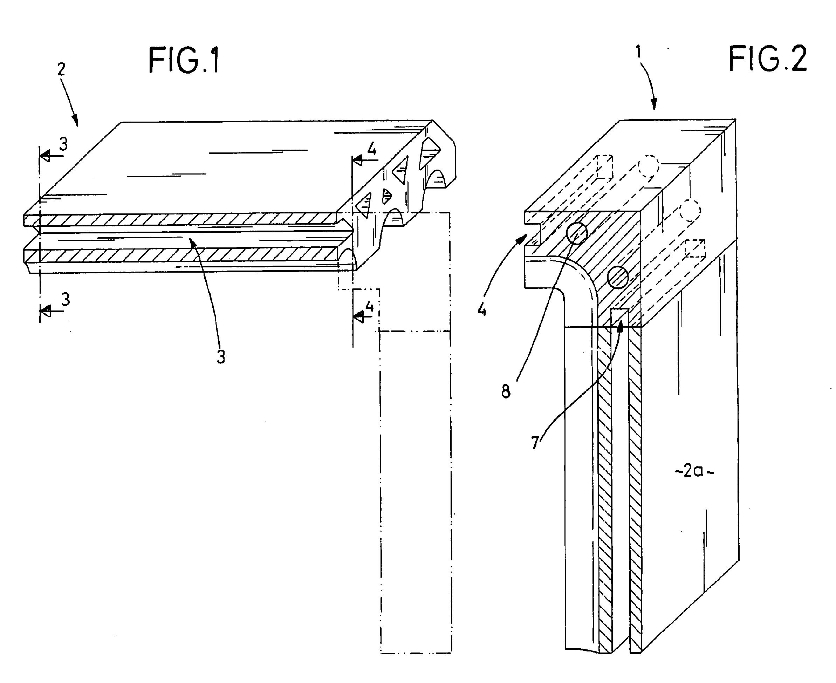

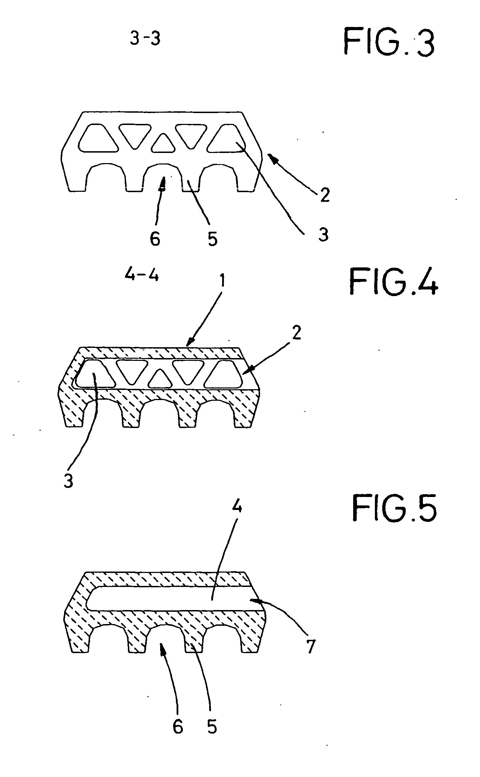

In Fig. 1 sind Dichtungsprofilleisten 2 und 2a dargestellt, die bei dem dargestellten Ausführungsbeispiel rechtwinklig aufeinanderzu stoßen und in diesem Bereich durch ein Eckstück 1 miteinander verbunden werden. In den Dichtungsprofilleisten 2 und 2a sind - wie dies besonders deutlich die Fig. 3, 4 und 5 zeigen, Kanäle 3 ausgenommen und außerdem weisen die Dichtungsprofilleisten 2 und 2a Rippen 5 und Nuten 6 auf, mit denen sie in einer die Dichtungsprofilleiste 2 bzw. 2a aufnehmende Nut des in den Zeichnungen nicht dargestellten Tübbings eingebettet werden können. Hierbei stehen - wie dies im Stand der Technik bekannt ist - die Dichtungsprofilleisten 2, 2a über die Endseiten der miteinander zu verbindenden Tübbinge vor (EP 255 600 B1 Fig. 1 und 2).

Die Dichtungsprofilleisten 2 und 2a werden im Extrusionsverfahren hergestellt, während das Eckstück 1 im Spritzgießverfahren hergestellt wird.

Hierzu werden die Enden der Dichtungsprofilleisten 2, 2a in eine entsprechende Form eingelegt und die offenen Kanäle 3 der Dichtungsprofilleisten 2 und 2a durch einen in der Spritzgießform vorgesehenen Kern verschlossen, so daß in diesem Bereich das Eckstück 1 nur mit einem Teil seiner Wandung mit den Wandungen der Dichtungsprofilleisten in Verbindung steht und hier während des Spritzgießens fest vulkanisiert wird. Nach Herstellen des Eckstückes 1 wird das Eckstück vom Kern abgezogen und nunmehr ist ein Hohlraum 4 entstanden, der sich über die Mündung der Kanäle 3 erstreckt und eine Verbindung der Kanäle 3 untereinander ermöglicht. Hierbei kann dieser Hohlraum 4 zum Inneren oder zum Äußeren des zu erstellenden Bauwerkes hin offen sein.

An den Hohlraum 4 ist aber auch ein Schlauch anschließbar, der eine Druckinjizierung in den Hohlraum 4 hinein ermöglicht.

Zusätzlich zum Hohlraum 4 oder zu den Hohlräumen 4 im Eckstück 1 können weitere Hohlräume 8 vorgesehen sein, die eine entsprechende Verformbarkeit des Eckstückes 1 gewährleisten.

Aus der Schnittdarstellung in Fig. 5 ist erkennbar, daß der Hohlraum 4 eine offene Seite 7 aufweist, die ihn zugänglich macht, so daß eine nachträgliche Aktivierung des Dichtungsrahmens möglich ist.

## Patentansprüche

1. Eckstück (1) eines Dichtungsrahmens für einen Tunneltübbing zur Herstellung eines Tunnelausbaues od. dgl., das an den Enden zweier unter einem Winkel gegeneinander laufenden Dichtungsprofilleisten (2, 2a) anliegt, wobei die Dichtungsprofilleisten (2, 2a) in ihrem Querschnitt mit in Längsrichtung bis in die Enden hinein verlaufende Rippen (5) und offenen Nuten (6) sowie Kanäle (3) versehen sind und das Eckstück (1) Hohlräume (4, 8) aufweist, die unter einem Winkel zu den Kanälen (3)) des einen wie des anderen Endes der Profilleisten (2, 2a) verlaufen, **dadurch gekennzeichnet, daß** der quer zur Längsachse der Kanäle (3) verlaufende Hohlraum (4) des Eckstückes (1) die zu den Enden hin offenen Mündungen der Kanäle (3) verbindet.

2. Eckstück nach Anspruch 1, **dadurch gekennzeichnet, daß** der Hohlraum (4) zu einer Außenseite des Eckstückes (1) bzw. der Dichtungsprofilleiste (2, 2a) hin offen ist, d. h. eine offene Mündung (7) aufweist.

3. Eckstück nach Anspruch 1, **dadurch gekennzeichnet, daß** der Hohlraum (4) zur Außenseite des Eckstückes (1) geschlossen und mit einem Schlauch verbindbar ist, der eine Druckinjizierung über den Hohlraum (4) in die Kanäle (3) ermöglicht.

4. Eckstück nach Anspruch 1 oder 2, **dadurch gekennzeichnet, daß** die offene Mündung (7) des Hohlraumes (4) zur Seite des anstehenden Wasserdruckes des Tunneltübbings gerichet ist.

5. Eckstück nach Anspruch 1 oder 2, **dadurch gekennzeichnet, daß** die offene Mündung (7) des Hohlraumes (4) zum Inneren des Tunnelausbaues gerichtet ist.

6. Eckstück nach einem oder mehreren der vorhergehenden Ansprüche, **dadurch gekennzeichnet, daß** der Hohlraum (4) einen rechteckigen Querschnitt aufweist.

7. Eckstück nach einem oder mehreren der vorhergehenden Ansprüche 1 bis 5, **dadurch gekennzeichnet, daß** der Hohlraum (4) einen parallelogrammförmigen Querschnitt aufweist.

8. Eckstück nach einem oder mehreren der vorhergehenden Ansprüche, **dadurch gekennzeichnet, daß** in dem Eckstück (1) Hohlräume (8) vorgesehen sind, die sich quer zur Längsachse der Kanäle (3) erstrecken.

## Claims

1. Corner area (1) of a sealing frame for a tunnel tubbing for construction of a tunnel lining or the like, which lies against the ends of two profile sealing strips (2, 2a) converging at an angle, where the profile sealing strips (2, 2a) are fitted in their cross section with ribs (5) running in lengthwise direction into the ends, and open grooves (6) and ducts (3), and the corner area (1) has cavities (4, 8) which run at an angle to the ducts (3) at both ends of the profile strips (2, 2a), **characterised in that** the cavity (4) of the corner area (1) running perpendicularly to the lengthwise axis of the ducts (3) connects the openings of the ducts (3) which are open at their ends.

2. Corner area according to claim 1, **characterised in that** the cavity (4) is open to one of the outer sides of the corner area (1) or the profile sealing strip (2, 2a), i.e. has an opening (7).

3. Corner area according to claim 1, **characterised in that** the cavity (4) is closed towards the outside of the corner area (1) and can be connected to a hose which permits a pressure injection via the cavity (4) into the ducts (3).

4. Corner area according to claim 1 or 2, **characterised in that** the opening (7) of the cavity (4) is aligned towards the side from which the water pressure of the tunnel tubbing is exerted.

5. Corner area according to claim 1 or 2, **characterised in that** the opening (7) of the cavity (4) is aligned towards the interior of the tunnel lining.

6. Corner area according to one or more of the above claims, **characterised in that** the cavity (4) has a rectangular cross section.

7. Corner area according to one or more of the above claims 1 to 5, **characterised in that** the cavity (4) has a parallelogram-shaped cross section.

8. Corner area according to one or more of the above claims, **characterised in that** cavities (8) are provided in the corner area (1) which extend at right angles to the lengthwise axis of the ducts (3).

## Revendications

1. Coin (1) de cadre d'étanchéité pour panneaux de cuvelage de tunnel, pour réaliser un chemisage de tunnel ou assimilé, qui applique aux extrémités de deux bandeaux profilés d'étanchéité (2, 2a) au tracé convergent selon un certain angle, les bandeaux profilés d'étanchéité (2, 2a) étant dotés dans leur section de nervures (5) qui pénètre dans le sens longitudinal jusque dans les extrémités, et de gorges ouvertes (6) ainsi que de canaux (3), et le coin (1) présentant des cavités (4, 8) qui forment un angle avec les canaux (3) de l'une comme de l'autre extrémité des bandeaux profilés (2, 2a), **caractérisé en ce que** la cavité (4) du coin (1) ayant un tracé transversal par rapport à l'axe longitudinal des canaux (3) relie les bouches des canaux (3) ouvertes en direction des extrémités.

2. Coin selon la revendication 1, **caractérisé en ce que** la cavité (4) est ouverte en direction d'un côté extérieur du coin (1) et/ou du bandeau profilé d'étanchéité (2, 2a), donc qu'elle présente une bouche (7) ouverte.

3. Coin selon la revendication 1, **caractérisé en ce que** la cavité (4) est fermée en direction du côté extérieur du coin (1) et qu'elle est reliable à un flexible permettant d'injecter sous pression dans les canaux (3) via la cavité (4).

4. Coin selon les revendications 1 ou 2, **caractérisé en ce que** la bouche (7) ouverte de la cavité (4) regarde vers le côté pression d'eau en présence afférent au cuvelage de tunnel.

5. Coin selon les revendications 1 ou 2, **caractérisé en ce que** la bouche (7) ouverte de la cavité (4) regarde vers l'intérieur du chemisage de tunnel.

6. Coin selon l'une ou plusieurs des revendications précédentes, **caractérisé en ce que** la cavité (4) présente une section rectangulaire.

7. Coin selon l'une ou plusieurs des revendications précédentes 1 à 5, **caractérisé en ce que** la cavité (4) présente une section en forme de parallélogramme.

8. Coin selon l'une ou plusieurs des revendications précédentes, **caractérisé en ce que** dans ledit coin (1) sont prévues des cavités (8) qui s'étendent transversalement à l'axe longitudinal des canaux (3).
